# EUROPEAN PATENT SPECIFICATION

(11) **EP 3 343 505 B1**
(45) Date of publication and mention of the grant of the patent: **17.02.2021**
(21) Application number: 17208684.5
(22) Date of filing: 19.12.2017
(51) Int. Cl.: G06T 7/292

(54) **DISTRIBUTED IMAGE COGNITION PROCESSING SYSTEM**
VERTEILTES BILDKOGNITIONSVERARBEITUNGSSYSTEM
SYSTÈME DE TRAITEMENT DE LA COGNITION PAR IMAGES DISTRIBUÉES

(30) Priority: 28.12.2016 US 201615391909
(43) Date of publication of application: 04.07.2018
(73) Proprietor: NXP USA, Inc., Austin TX 78735 (US)
(72) Inventor: Stewart, Malcolm Douglas, Redhill, Surrey RH1 1QZ (GB); Guha, Rabindra, Redhill, Surrey RH1 1QZ (GB)
(74) Representative: Miles, John Richard

(56) References cited:
- EP-A1- 3 021 134
- US-A1- 2003 201 929
- US-A1- 2010 157 064

## Description

### Field

This disclosure relates generally to an image processing system, and more specifically, to an image processing system implemented in vehicles to assist in vehicle control.

### Related Art

Vehicles are often equipped with electronic control systems to assist drivers in controlling the vehicle. Such systems may include image sensors. Based on information derived from sensor data, the vehicle's position with respect to its surrounding environment may be obtained. An example of such a system is an automated parking system, which can control a vehicle to move it into a parking space by performing maneuvers for parallel parking, perpendicular parking, or angle parking, based on the information derived from sensor data.

US 2010/0157064 A1 discloses an intelligent distributed object tracking system for enhancing object tracking wherein there is always at least one smart node in charge of tracking the object at any given time. EP 3 021 134 A1 discloses a vehicle safety system comprising a detection system which is able to detect a target object that moves between different detectors. US 2003/0201929 A1 discloses a multi-sensor system with a processor for processing data from the sensors.

### Summary

Aspects of the invention are defined in the independent claims.

In a first disclosed example there is provided a method for operating an image cognition processing system according to independent claim 1.

In a second disclosed example, there is provided an image cognition processing system according to independent claim 10.

### Brief Description of the Drawings

The present invention may be better understood, and its numerous objects, features, and advantages made apparent to those skilled in the art by referencing the accompanying drawings.
FIG. 1 illustrates a block diagram depicting a known vision system.
FIG. 2 illustrates a block diagram depicting an example distributed image cognition processing system in which the present disclosure is implemented, according to some embodiments.
FIG. 3 illustrates a block diagram depicting an example vehicle implementation of the distributed image cognition processing system, according to some embodiments.
FIG. 4 and 5 illustrate example object metadata transfer operations implemented in a distributed image cognition processing system, according to some embodiments.
FIG. 6A and 6B illustrate flowcharts depicting example object processing operations implemented by image cognition processors, according to some embodiments.
FIG. 7A and 7B illustrate flowcharts depicting alternative example object processing operations implemented by image cognition processors, according to some embodiments.
FIG. 8 illustrates a block diagram depicting an example computing device that may be used to implement an image cognition processing system.

The present invention is illustrated by way of example and is not limited by the accompanying figures, in which like references indicate similar elements, unless otherwise noted. Elements in the figures are illustrated for simplicity and clarity and have not necessarily been drawn to scale.

### Detailed Description

The following sets forth a detailed description of various embodiments intended to be illustrative of the invention and should not be taken to be limiting.

### Overview

Due to advancing technology, vehicles are presently being equipped with advanced driver assistance systems (ADAS), which often includes a collision avoidance system to assist drivers in controlling the vehicle, even without driver intervention. The vehicle may be controlled automatically without driver intervention to avoid collisions by breaking, steering, or both, based on obtained sensor data. Such systems may also provide warnings to drivers that a collision is imminent so that the driver can take appropriate action to avoid collisions.

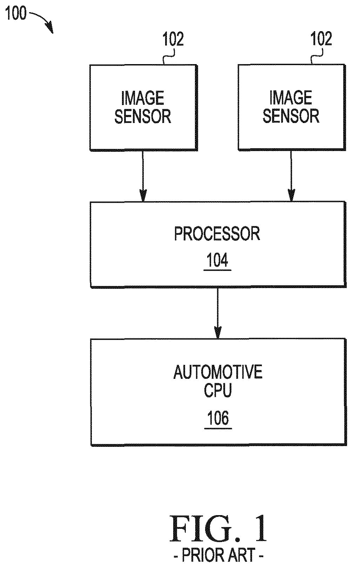

A vision system may also be implemented on a vehicle to provide object detection. FIG. 1 illustrates a block diagram depicting a known vision system 100. Vision system 100 includes a number of image sensors 102 (in the example, two image sensors 102 are implemented). Each image sensor 102 includes a local image processor. Each local image processor of the image sensors 102 is in turn communicatively coupled to a processor 104, which in turn is communicatively coupled to an automotive central processing unit (CPU) 106. Each image sensor 102 is configured to capture images of a surrounding environment independently of the other image sensors 102. The captured images are processed by the image sensor's local image processor independently of the other image processors to detect any objects present in the captured image. Each image sensor's local image processor then provides image data to the processor 104 for further processing, such as for vehicle control. For example, the processor 104 may determine that the received image data indicates an object is approaching the vehicle and, in response, the processor 104 provides an indication to the automotive CPU 106 that the automotive CPU should engage in object avoidance.

The vision system 100 is relatively simple to implement, but is computationally intensive due to the large amount of processing performed independently by the local processors of the image sensors 102 on object detection. Since the majority of detected objects approach the vehicle from the front of the vehicle (e.g., toward the windshield of a forward-moving vehicle), multiple image sensors 102 may be placed near the vehicle in order to detect the larger number of objects. However, these multiple image sensors 102 may have an overlapping field of view such that the multiple image sensors 102 capture images that include a same object, which is processed by each of the multiple image sensors 102 in a duplicative manner, which unnecessarily burdens the local image processors that are already performing computationally intensive processes for real-time object detection.

The present disclosure provides a distributed image cognition processing system that shares object metadata between image cognition processors, which reduces duplicative processing, as well as decreases the processing overhead of the image processors. Such a distributed system is especially beneficial for minimizing the risk to driver safety that may occur due to delayed object detection resulting from an overtaxed image processor.

Such a system includes a number of image cognition processors (or ICPs) coupled to a respective image sensor that captures optical data in its field of view of the surrounding environment, where the image sensors are located adjacent to one another. Each ICP is configured to perform object processing on the optical data of its respective image sensor, which includes object detection, object classification, and object tracking. Each ICP also generates object metadata for each detected object during object processing. When a given ICP determines that a tracked object is about to move into an adjacent field of view, the metadata for that tracked object is sent to the neighboring ICP. The neighboring ICP searches for the object in a localized region, and begins tracking the object, without performing object detection and object classification. The metadata may be sent either from the ICP that was tracking the object or from a master ICP that maintains an object metadata database.

It is noted that receiving the metadata associated with an object (either from an adjacent ICP or from the master ICP) and searching for the object in a portion of a field of view is less computationally intensive than performing object detection and object classification as if the object were newly detected. By sharing object metadata among the ICPs, less processing time is spent by the ICPs on detecting and classifying objects that have already been detected and classified, which decreases the overall processing requirements of the ICPs.

### Example Embodiments

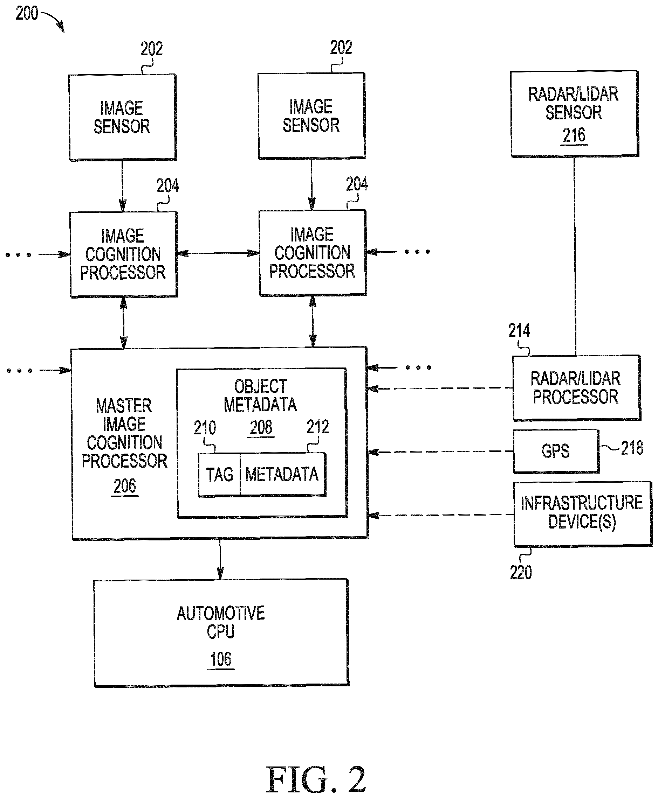

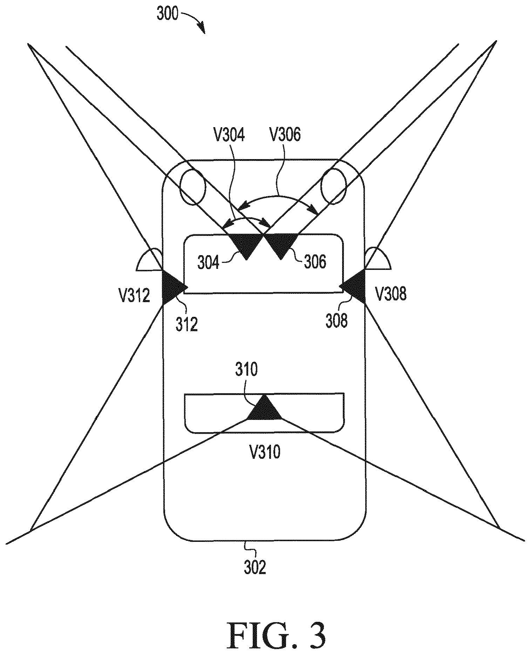

FIG. 2 illustrates a block diagram depicting an example distributed image cognition processing system 200 in which the present disclosure is implemented. The distributed image cognition processing system 200 (also referred to as simply system 200) includes a number of image sensors 202, each of which is communicatively coupled to an image cognition processor (ICP) 204. Each ICP 204 is also communicatively coupled to at least one other ICP 204. System 200 also includes a master image cognition processor (master ICP) 206. In some embodiments, the master ICP 206 is a dedicated processor, distinct from the ICPs 204. In such embodiments, the master ICP 206 is coupled to at least one ICP 204, and may be coupled to more than one ICP 204 (such as coupled to all ICPs). In other embodiments, the master ICP 206 is not a dedicated processor. Instead, one of the ICPs 204 is designated as the master ICP 206 and is configured to perform the duties of the master ICP 206 in addition to the duties of the ICP 204, as discussed below. In both embodiments, the master ICP 206 is communicatively coupled to an automotive central processing unit (CPU) 106. While two image sensors 202 and two ICPs 204 are shown in this example, a larger number of image sensors 202 and ICPs 204 may be implemented in other embodiments, such as that discussed below in connection with FIG. 3.

Each image sensor 202 is configured to capture an image from the surrounding environment and provide the image to its local ICP 204. Each image sensor 202 may be positioned on a vehicle, where each image sensor 202 has a field of view aimed away from the vehicle to capture a different portion of the surrounding environment. An image sensor 202 may be located adjacent to another image sensor 202, where such adjacent image sensors 202 are also referred to as neighboring image sensors 202 having neighboring fields of view. The ICPs 204 that are respectively coupled to neighboring image sensors 202 may also be referred to as neighboring ICPs 204. In some embodiments, the field of view of neighboring image sensors 202 may overlap. The field of view of each image sensor 202 may be permanently stationary or may be adjustable. Each image sensor 202 is configured to capture images in its field of view and provide them to its local ICP 204 in an on-going manner (e.g., capture images at a known video frame rate).

Each ICP 204 is configured to perform object processing, which includes object detection, object classification, and object tracking, based on the received images. In some embodiments, the master ICP 204 is also configured to perform object processing, as further discussed below. Once an ICP 204 detects an object in the captured image (where the ICP 204 is also referred to as a detecting ICP), the detecting ICP 204 classifies the object as having a particular object type, indicating whether the object is a Person, a Vehicle, a Sign, a Road Marking, and the like. The detecting ICP 204 also tracks the object, such as by determining the estimated distance between the detecting ICP 204 and the object, determining the motion vector of the object, which has a direction relative to the detecting ICP 204 and a speed relative to the detecting ICP 204, and determining a size of the object.

The information generated by the detecting ICP 204 for an object during object processing is referred to herein as metadata, which is data that describes the object. The detecting ICP 204 may also generate additional attributes or designations based on the object type, which are also included in the metadata. For example, an object that has a classification of Person may also be associated with an attribute of Man, Woman, or Child, or similar designation of gender and age. An object that has a classification of Vehicle may also be associated with an attribute of one of Car, Van, Truck, Bus, or Motorcycle (or other vehicle model). An object that has a classification of Sign may also be associated with an attribute that indicates it is either a speed sign with some speed limit value, a lamp post, or a sign post. An object that has a classification of Road Marking may be associated with an attribute that indicates it is either a vehicle lane, a curb, or a road edge. These examples are intended to be illustrative and are not limiting.

Each ICP 204 is configured to provide the metadata determined for each detected object to the master ICP 206. When an object is initially detected, the detecting ICP 204 requests a tag from the master ICP 206 that will be associated with the object's metadata. The tag is a globally unique identifier within the system 200, allowing each object to be identified by its associated tag and tracked individually within the system 200. After receiving the tag from the master ICP 206, the detecting ICP 204 sends object's metadata with the object's associated tag to the master ICP 206. The master ICP 206 is configured to maintain an object metadata database (DB) 208 in local memory of the master ICP 206, which stores the metadata of all objects presently tracked by ICPs 204 in system 200. Each entry of the object metadata DB 208 includes metadata 212 and its corresponding tag 210.

Each ICP 204 is configured to generate metadata for each object being tracked by the ICP 204 on an on-going basis, which may be stored in local memory of the ICP 204. Each ICP 204 is also configured to send metadata updates to the master ICP 206, which then updates the object metadata DB 208 to include the most recent metadata for an object. In some embodiments, the object metadata DB 208 includes the various metadata of an object over time (e.g., a motion vector determined for an object may change over time). Metadata 212 stored in the object metadata DB 208 may be discarded in response to the object no longer being tracked by any of the ICPs 204 (e.g., when the vehicle has moved past the object, which is no longer present in any field of view of the image sensors).

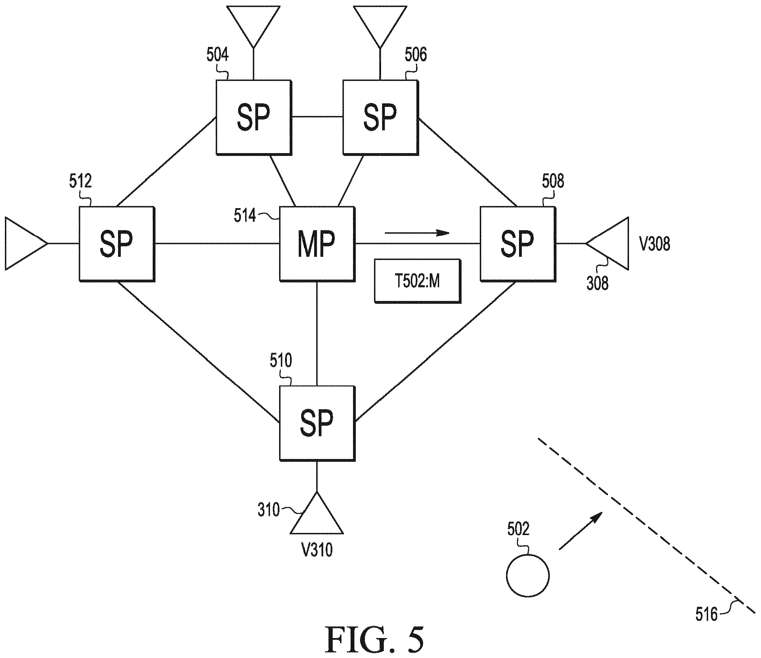

In some embodiments, the ICPs 204 act as slave ICPs that simply report object metadata to the master ICP 206. The master ICP 206 knows a location of each ICP 204 on the vehicle, such as whether the ICP 204 is forward-facing, rear-facing, left-facing, or right-facing. The master ICP 206 also knows which ICPs 204 and image sensors 202 are adjacent to one another. The master ICP 206 is able to evaluate the metadata of each object presently tracked in the system 200 and determine whether an object is leaving the field of view of one ICP's image sensor and is moving into a neighboring field of view of an adjacent ICP's image sensor. In response, the master ICP 206 retrieves the tag and metadata of the object from the object metadata DB 208 and provides them to the adjacent ICP in anticipation of the object entering the neighboring field of view of the adjacent ICP's image sensor. The adjacent ICP is directed by the master ICP to search for the object in an area near a boundary between the neighboring fields of view, and then continues tracking the object (if found). The adjacent ICP can use the metadata to help in the search for the object, such as using classification data that indicates whether the adjacent ICP should be looking for a vehicle, a person, a sign, or a road marking. Such an embodiment is further discussed below in connection with FIG. 5.

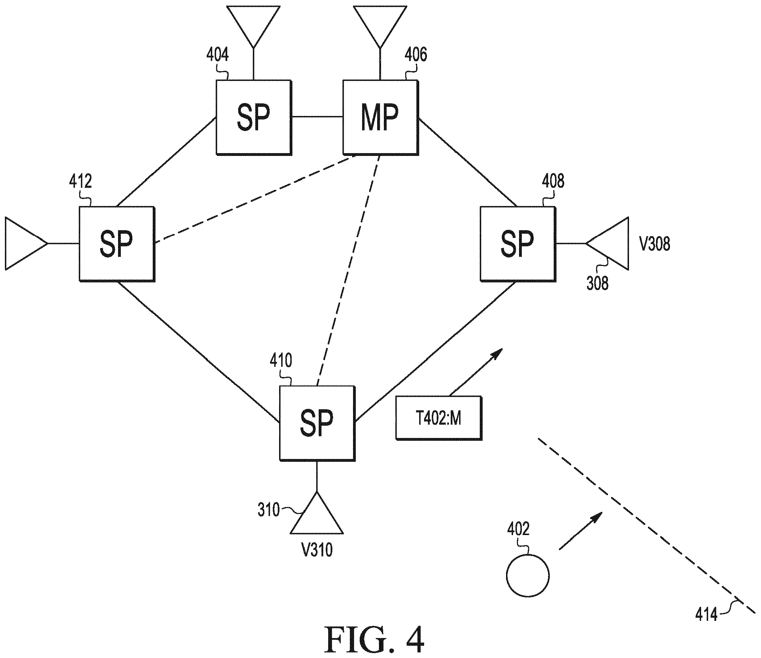

In other embodiments, each ICP 204 may be informed by the master ICP 206 of whether the ICP 204 is forward-facing, rear-facing, left-facing, or right-facing, or may be programmed to know of their position (e.g., each ICP 204 loads a pre-programmed position during bootup or when it is activated). Each ICP 204 is also informed by the master ICP 206 of its adjacent ICPs. In such embodiments, each ICP 204 is also configured to evaluate the metadata of the objects presently tracked within the field of view of the ICP's image sensor and determine whether an object is leaving the field of view of the ICP's image sensor and is moving into a neighboring field of view of an adjacent ICP's image sensor. In response, the ICP 204 retrieves the tag and metadata of the object from local memory and provides them to the adjacent ICP in anticipation of the object entering the neighboring field of view of the adjacent ICP's image sensor. The adjacent ICP knows to search for the object in an area near a boundary between the neighboring fields of view, and then continues tracking the object (if found). The adjacent ICP can also use the metadata to search for the object. Such an embodiment is further discussed below in connection with FIG. 4.

In both embodiments, receiving the tag and metadata associated with an object (either from an adjacent ICP or from the master ICP) and searching for the object in a portion of a field of view is less computationally intensive than performing object detection and object classification as if the object were newly detected.

The master ICP 206 may also be communicatively coupled to a RADAR/LIDAR processor 214, which in turn is coupled to one or more RADAR/LIDAR sensors 216. The RADAR/LIDAR processor 214 may provide addition sensor data used by the master ICP 206 for object processing, such as to provide additional metadata describing the objects tracked within system 200. Other positional sensors or systems, such as GPS (global positioning system) 218, may also provide additional sensor data to master ICP 206 for object processing. For example, GPS positioning information could be used in combination with a knowledge database that includes map data (e.g., map data that is downloaded to a knowledge database for use by the master ICP) to determine the path of the road ahead and give the master ICP some advance warning of features or objects that it should be looking for in certain directions, such as curves, intersections, and the like. In some embodiments, the knowledge database may include additional geographical details, such as elevation changes, blind corners, and the like. The knowledge database may also include additional information about the surrounding environment that may be determined from processing the optical data, such as determining the present weather (e.g., during object processing, rain is detected in the field of view of the image sensors). Additional sensors may also be present on the vehicle to further validate or reinforce such findings, such as a present weather indication (e.g., the vehicle includes a rain indicator that detects rain on the windshield) or other weather information (e.g., an hourly weather forecast) may be downloaded to the knowledge database.

In some embodiments, the master ICP may also be communicatively coupled to one or more surrounding infrastructure devices 220, such as processors implemented in stop lights, road cameras, and the like, by wireless connections of the infrastructure devices. Such infrastructure devices would pass along warnings of vehicles, pedestrians, bicycles, or other objects approaching around a blind corner, an indication that a traffic light is about to change, and the like. The master ICP in turn may relay information to the automotive CPU, such as the indication that a traffic light is about to change and a present weather indication that it is raining, which indicates a stopping distance of the vehicle will likely be affected and that the automotive CPU should be ready to implement brake assist or other ADAS procedure.

In some embodiments, object detection is performed using Histogram of Gradients (HoG), which counts occurrences of gradient orientation in localized portions of an image, which may be divided into a dense grid of uniformly spaced cells. Local object appearance and shape within an image may be described by the distribution of intensity gradients or edge directions. A histogram of gradient directions is compiled for the pixels within each cell, which are concatenated to produce a HoG descriptor that describes an object. In some embodiments, the local histograms of the cells may be normalized by calculating a measure of intensity across a larger region or block of the image, which is used to normalize all cells within the block. Other suitable methods of object detection may be used in other embodiments, such as edge matching, divide-and-conquer search, greyscale matching, gradient matching, and the like.

In some embodiments, object classification is performed using Support Vector Machine (SVM), which is a supervised learning model with associated learning algorithms that analyze data used to classify objects. Multiple examples may be defined for each object classification, where an SVM model is a representation of the various examples as points in space, mapped so that the examples of the object classifications are divided by a clear gap that is as wide as possible. New examples are then mapped into that same space and predicted to belong to a category based on which side of the gap they fall. Other suitable methods for object classification may be used in other embodiments, such as by using a look-up table or library database that include characteristics of known object types.

In some embodiments, object tracking is performed using optical flow algorithm to generated motion vectors of an object. Optical flow is the pattern of apparent motion of objects in a visual scene caused by the relative motion between a reference point and a scene, where the relative motion may be represented by dots and lines. Dots represent tracked edges or surfaces of the object and lines originating from the dots represent relative movement of the edges and surfaces. Sequences of ordered images allow the estimation of motion as either instantaneous image velocities or discrete image displacements. Optical Flow algorithm calculates the motion between two image frames which are taken at times T and T+ΔT to determine a motion vector of the object. Example optical flow algorithms may include one or more of KLT optical flow, Harris Corner Detector, and Canny Edge Detector. Other suitable methods for object tracking may be used in other embodiments, such as an appropriate motion estimation technique such as kernel-based tracking or contour tracking.

The image sensors 202 may be implemented using any appropriate image sensors, such as image sensors that use CMOS (complementary metal-oxide-semiconductor) or MOS (metal-oxide-semiconductor) technologies, semiconductor charge-coupled devices, active pixel sensors, and the like. The image sensors 202 capture optical data that represents visual images from the image sensor's field of view and provides the optical data to the respective ICP 204.

Each ICP 204 and master ICP 206 includes active circuitry, examples of which include but are not limited to: a processor, memory (such as for storing a global object metadata database or a local object metadata database or a knowledge database that stores map data, weather data, GPS data, and the like), logic, analog circuitry, sensor, a MEMS device, a standalone discrete device such as a resistor, inductor, capacitor, diode, power transistor, and the like. In some embodiments, an image sensor 202 and an ICP 204 may implemented as an integrated circuit, or may be separate components that are co-located on a single device, such as a printed circuit board (PCB). Each ICP 204 includes at least one port or other network interface that can be linked to one or more other ICPs 204, the master ICP 206, or both as an external connection. The ICPs 204 and the master ICP 206 may be connected by wired means (e.g., peripheral or high speed communication buses) or wireless means (e.g., antenna) that allow data flow among the ICPs 204 and the master ICP 206. The ICPs 204 and the master ICP 206 may be configured to use a communication protocol for communicating with one another, such as automotive Ethernet protocol.

FIG. 3 illustrates a top-down view depicting a distributed image cognition processing system 300 implemented on a vehicle 302. In the embodiment shown, system 300 includes five image sensors 304, 306, 308, 310, and 312, which are placed at various locations on a vehicle 302, which may be a car, a truck, a motorcycle, and the like. Each image sensor has a field of view that is positioned away from the vehicle to capture an image of the surrounding environment. Each image sensor is coupled to a respective ICP. Example connections between the ICPs are further discussed in connection with FIG. 4 or FIG. 5.

Image sensors 304 and 306 are located on a front side of the vehicle 302, where image sensor 304 has a field of view V304 that overlaps a field of view V306 of image sensor 306, where views V304 and V306 are front-facing (e.g., V304 and V306 are aimed in a typical forward-moving direction of the vehicle). Image sensor 308 is located on a right side of the vehicle, and has a field of view V308 that faces away from the vehicle to the right of the vehicle. Image sensor 310 is located on a rear side of the vehicle, and has a field of view V310 that is rear-facing (e.g., aimed in a typical rearward-moving direction of the vehicle). Image sensor 312 is located on a left side of the vehicle, and has a field of view V312 that faces away from the vehicle to the left of the vehicle. Additional image sensors may be included as needed, such as on top of the vehicle facing away from the vehicle in an angled position (e.g., giving a side or lateral view away from the vehicle at a 0 degree angle, up to a 90 degree angle that gives an upward view away from the vehicle). In some embodiments, it is preferred that the image sensors are positioned adjacent to one another such that a complete view of the area surrounding the vehicle is captured.

The fields of view of adjacent image sensors may overlap by some amount, such as V304 and V306 that have a large amount of overlap, or V308 and V310 that have a smaller amount of overlap. In some embodiments, load balancing is implemented to divide the overlapping views into regions or portions in which the adjacent ICPs are responsible for object detection. For example, the ICP coupled to image sensor 304 may be responsible for object detection in a left portion of the overlapping view, and the ICP coupled to image sensor 306 may be responsible for object detection in a right portion of the overlapping view. The overlapping views may be divided to ensure that the processing workload is equitably distributed among the ICPs that receive optical data from the overlapping view. Further, if an object has been detected by one ICP in a given area within the overlapping view, the ICP sends metadata about the detected object to an adjacent ICP that also receives optical data from the overlapping view, which indicates to the adjacent ICP that the area that contains the object should not be re-processed and reduces duplicative processing. Metadata for objects located within an overlapping view is sent between adjacent ICPs in a same manner as that discussed below in connection with FIG. 4 and 5.

In other embodiments, the ICPs of system 300 may also be in communication with other ICPs provided at locations in the surrounding environment, such as around a building, a shopping mall, a parking lot, and the like. In such embodiments, the ICPs or master ICP or both on vehicle 302 utilize a wireless communication means to receive object metadata from ICPs in the surrounding environment.

FIG. 4 illustrates an example interconnection arrangement of system 300, which includes four slave ICPs (SP) 404, 408, 410, and 412, and a master ICP (MP) 406, arranged in a same manner as FIG. 3. In other words, SP 404 is communicatively coupled to image sensor 304, MP 406 is coupled to image sensor 306, SP 408 is coupled to image sensor 308, SP 410 is coupled to image sensor 310, and SP 412 is coupled to image sensor 312. In the embodiment shown, MP 406 is configured to maintain the object metadata DB, and is also configured to perform object processing for images captured by image sensor 306.

In one embodiment, the ICPs are connected in a bi-directional ring network, as shown by the solid lines that connect ICPs (i.e., the lines that connect the SPs and the MP). Each ICP has at least two ports, such as a first (or left) port and a second (or right) port, which are respectively coupled to a neighboring ICP. In the embodiment shown, each ICP knows its adjacent ICP. Each ICP is configured to share object metadata to its adjacent ICP, which may be an SP or the MP, by forwarding the object metadata along the ring network. Each SP is also configured to send metadata updates to the MP along the ring network, where each SP is effectively connected to the MP. In another embodiment, additional links may be provided between SP 412 and 410 (as shown by the dashed lines) in order for each SP to be directly connected to the MP.

An example metadata transfer operation is also illustrated in FIG. 4. At some point, image sensor 310 captures one or more images within field of view V310 that includes object 402. During object detection performed on the received image(s), SP 410 detects the object 402 and requests a tag for the object from the MP 406. MP 406 generates the tag and sends the tag to the requesting SP 410. In some embodiments, MP 406 may also store the tag in the object metadata DB. SP 410 generates metadata describing the object 402 during object classification and object tracking, such as an object type and motion vector of the object 402. The generated metadata is provided with the associated tag to MP 406 to update the object metadata DB (e.g., an update message addressed to the MP is passed along the ring network through SP 408 or alternatively through SP 412 and 404, or directly to MP 406 on an optional direct connection).

As SP 410 tracks the object 402, the object 402 may appear to "move" within the field of view V310. As the vehicle, or the object, or both move in the environment, the object 402 may appear to move from one field of view to a neighboring field of view, such as from view V310 to view V308 (e.g., the vehicle 302 is being passed on the right by another vehicle). In order to avoid having SP 408 repeat object detection and object classification for object 402 (which has already been performed by SP 410), SP 410 provides the metadata for object 402 with the associated tag (shown as a message that includes tag T402 and metadata M) to SP 408 in anticipation of object 402 moving into view V308. In order to provide the metadata to the neighboring ICP before the object 402 enters field of view V308, a boundary 414 is defined at the edge where V308 begins. The metadata is sent immediately before the object 402 reaches the boundary 414, before SP 408 can begin object detection and object classification.

A boundary, like boundary 414, may be defined as a line that falls within a view that corresponds to the closest edge of the neighboring view, such as where boundary 414 corresponds to the edge of view V308 that overlaps into view V310. A boundary may alternatively be defined as the edge of a present view that is nearest to the closest edge of the neighboring view, such as where boundary 414 corresponds to an edge of view V310 when views V310 and V308 do not overlap, but are still adjacent to one another. In this manner, at least one boundary is defined between each adjacent view.

In order to ensure "early" sharing of metadata (where the metadata is sent before the object passes into the neighboring field of view), each ICP may use different boundaries associated with the neighboring view to which the object is moving. For example, SP 410 may use a boundary that corresponds to a closest edge of neighboring view V308 to determine when to send metadata to SP 408 in response to an object moving toward view V308, and may use a different boundary that corresponds to a closest edge of V312 to determine when to send metadata to SP 412 in response to an object moving toward view V312. Two adjacent ICPs may not use the same boundary to determine when to send metadata. For example, SP 408 may use a boundary that corresponds to a closest edge of neighboring view V310, where the edge of view V310 overlaps into view V308, which is different from SP 410 using the boundary that corresponds to a closest edge of view V308.

In response to receipt of the metadata from SP 410, SP 408 searches for the object 402 near the boundary 414 of V308. For example, SP 408 receives the metadata message on a port of SP 408 that is associated with or known to be coupled to SP 410 having a neighboring view V310, and SP 408 knows to search for the object near the boundary that is associated with the neighboring view V310. Once found, SP 408 continues tracking the object. If the object 402 is not found, SP 408 discards the metadata for the object 402. In some embodiments, SP 408 also sends an update to MP 406 indicating the metadata associated with the object 402 and the tag associated with object 402 should be discarded.

It is noted that V310 and V308 may have overlapping edges, where the object 402 may appear in both views simultaneously. In some embodiments, once SP 410 has sent the metadata for object 402 to SP 408 (which is immediately before the object 402 has crossed boundary 414 into V308), SP 410 stops tracking the object 402, even if the object 402 is still present in V310. In other embodiments, SP 410 continues tracking the object 402 that is still present in V310 even after the object 402 has crossed boundary 414 into V308. In such embodiments, SP 410 may continue forwarding the metadata of object 402 to SP 408 until SP 408 has confirmed it has found the object 402 in V308 or until object 402 passes out of V310 altogether.

FIG. 5 illustrates another example interconnection arrangement of system 300, which includes five slave ICPs (SP) 504, 506, 508, 510, and 512, and a dedicated master ICP (MP) 514, arranged in a same manner as FIG. 3. In other words, SP 504 is communicatively coupled to image sensor 304, SP 506 is coupled to image sensor 306, SP 508 is coupled to image sensor 308, SP 510 is coupled to image sensor 310, and SP 512 is coupled to image sensor 312. MP 514 is configured to maintain the object metadata DB.

In one embodiment, the ICPs are connected in a mesh network, as shown by the solid lines that connect the ICPs (i.e., the lines that connect the SPs and MP). Each SP has at least one port coupled to a neighboring SP and a port coupled to the MP. In the embodiment shown, the MP knows which SPs are adjacent to each other. Each SP is configured to send metadata updates to the MP to be included in the object metadata DB.

An example metadata transfer operation is also illustrated in FIG. 5. Similar to FIG. 4, at some point, image sensor 310 captures one or more images within field of view V310 that includes object 502. During object detection, SP 510 detects the object 502 and requests a tag for the object from MP 514. MP 514 generates the tag and sends the tag to the requesting SP 510. In some embodiments, MP 514 also stores the tag in the object metadata DB. SP 510 generates metadata describing the object 502 during object classification and object tracking, such as an object type and motion vector of the object 502. The generated metadata is provided with the associated tag to MP 514 to update the object metadata DB (e.g., an update message addressed to the MP is passed directly to MP 514).

As SP 510 continues to track the object 502, MP 514 may analyze the metadata received from SP 510 and determine that the object 502 is moving from one field of view to another, such as from V310 to V308. In order to avoid having SP 508 repeat object detection and object classification for object 502 (which has already been performed by SP 510), MP 514 provides the metadata for object 502 with the associated tag (shown as a message that includes tag 502 and metadata M) to SP 508 in anticipation of object 502 moving into V308. In order to provide the metadata before the object 502 enters field of view V308, a boundary 516 is defined at the edge where V308 begins. The metadata is sent immediately before the object 502 reaches boundary 516, before SP 508 can begin object detection and object classification. As noted above, each ICP may use different boundaries associated with the neighboring view.

In response to receipt of the metadata from MP 514, SP 508 searches for the object 502 near the boundary 516 of V308. For example, the metadata message may include an identifier of the neighboring view from MP 514, which indicates SP 508 should search near the boundary associated with that neighboring view. Once found, SP 508 continues tracking the object. If the object 502 is not found, SP 508 discards the metadata for object 502. In some embodiments SP 508 also sends an update to MP 514 indicating the metadata associated with the object 502 and the tag associated with object 502 should be discarded.

It is noted that V310 and V308 may have overlapping edges, where the object 502 may appear in both views simultaneously. In some embodiments, once MP 514 has sent the metadata for object 502 to SP 508 (which is immediately before the object 502 has crossed boundary 516 into V308), MP 514 sends a command to SP 510 to stop tracking the object 502, even if the object 502 is still present in V310. In other embodiments, SP 510 continues tracking the object 502 that is still present in V310 even after the object 502 has crossed boundary 516 into V308, absent any command from MP 514. In such embodiments, SP 510 may continue sending metadata updates of object 502 to MP 514 until object 502 passes out of V310 altogether.

It is also noted that the example metadata transfer operation illustrated in FIG. 5 is similar to that example shown in FIG. 4, with the exception that the MP decides whether metadata is sent to an adjacent ICP in FIG. 5, while each SP decides whether metadata is sent to an adjacent ICP in FIG. 4. In some embodiments, a dedicated MP like that shown in FIG. 5 may be more beneficial for performing the metadata analysis of whether the object is moving into another field of view, as compared with a dual MP/SP like that shown in FIG. 4, which may be overburdened by performing both object processing for an image sensor and metadata analysis.

In some embodiments, it may be beneficial to have the dual MP/SP configuration shown in FIG. 4, where the MP duties are performed by a forward-facing SP, due to the majority of the new objects being detected at the front of the vehicle. For example, updating the object metadata DB with metadata for new objects may be faster when performed by the forward-facing detecting SP itself, as compared with sending an update to an MP that is located further down the network.

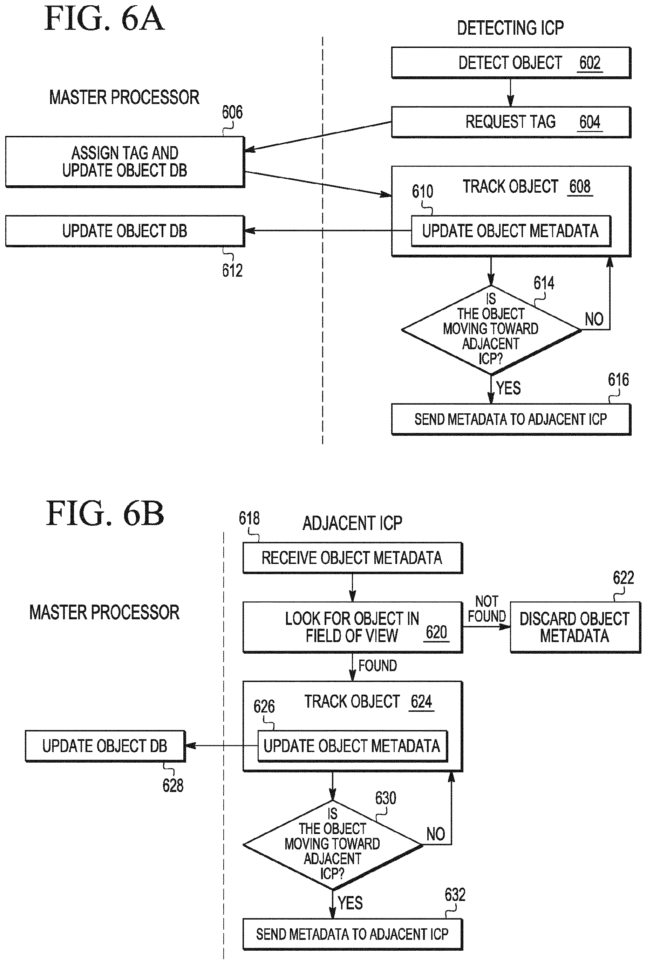

FIG. 6A illustrates a flowchart depicting example object processing operations implemented by image cognition processors of the example system discussed herein, which is referred to as a process. Operations implemented by the master ICP (also referred to as the master processor) are shown on the left side of the flowchart, and operations implemented by an ICP that detects an object (also referred to as a detecting ICP) are shown on the right side of the flowchart.

The process begins at operation 602, when the detecting ICP detects an object in the field of view of its respective image sensor. The detecting ICP may also perform object classification during operation 602. The detecting ICP may detect multiple objects within its respective field of view, and begins a separate instance or execution of the process shown in FIG. 6A for each detected object.

The process continues to operation 604, where the detecting ICP requests a tag for the object from the master processor. The tag is a globally unique identifier used to identify objects that have been detected by any one of the ICPs in the distributed image cognition processing system. The process continues to operation 606, where the master processor generates and assigns a tag to the detected object in response to the request from the detecting ICP. The master processor updates the object metadata database (DB) with the tag and sends the tag to the detecting ICP.

It is noted that in another embodiment, the detecting ICP may generate its own locally unique tag for the object and maintain its own local object metadata database. The detecting ICP may provide the tag to the master processor, which then generates a globally unique tag for the object in a global object metadata database. For example, the master processor might concatenate an ICP number (e.g., 3 bits) to the locally unique tag (e.g., n bits) to generate the globally unique tag.

The process continues to operation 608, where the detecting ICP tracks the object as it remains in the field of view of the respective image sensor. As the object is tracked, the detecting ICP generates metadata for the object on an on-going basis. The detecting ICP sends a metadata update to the master processor each time metadata is generated, shown as operation 610. The detecting ICP may send an update message that includes the generated object metadata and the associated tag. The master processor uses the tag to locate a corresponding entry in the object metadata DB, and updates the entry to include the received object metadata, shown as operation 612, in response to receiving the metadata update.

Returning to operation 608, the process continues to operation 614, where the detecting ICP determines whether the object being tracked is moving toward an adjacent ICP. Operation 614 may occur each time metadata is generated. The detecting ICP analyzes the metadata to determine whether the object is moving toward a boundary associated with an ICP that is adjacent to the detecting ICP, which is also referred to as an adjacent ICP. If the object is not moving toward an adjacent ICP, the detecting ICP returns to operation 608 and continues tracking the object. If the object is moving toward an adjacent ICP, the process continues to operation 616, where the detecting ICP sends an object metadata message to the adjacent ICP, which includes the most-recently updated or generated object metadata and the associated tag. The adjacent ICP may then begin a separate instance or execution of the process shown in FIG. 6B for each received object metadata message.

FIG. 6B illustrates a flowchart depicting additional example object processing operations implemented by image cognition processors of the example system discussed herein, which is also referred to as a process. Operations implemented by the master processor are shown on the left side of the flowchart, and operations implemented by an ICP that receives object metadata (also referred to as an adjacent ICP) are shown on the right side of the flowchart.

The process begins at operation 618, where the adjacent ICP receives an object metadata message from another ICP, like the detecting ICP discussed above in connection FIG. 6A. The metadata message includes object metadata and an associated tag. The process continues to operation 620, where the adjacent ICP looks for the object in the field of view of the respective image sensor communicatively coupled to the adjacent ICP. For example, the adjacent ICP may focus a search for the object in a region near the vicinity of the boundary associated with the ICP that sent the object metadata. If the object is not found, the object metadata is discarded in operation 622. In some embodiments, the adjacent ICP also sends an update message to master processor in operation 622, where the update message indicates that the object was not found and that metadata associated with the object in the object metadata DB should also be discarded.

Returning to operation 620, if the object is found, the process continues to operation 624, where the adjacent ICP tracks the object as it remains in the field of view of the respective image sensor. As the object is tracked, the adjacent ICP generates metadata for the object on an on-going basis. The adjacent ICP sends a metadata update to the master processor each time metadata is generated, shown as operation 626. The adjacent ICP may send an update message that includes the generated object metadata and the associated tag. The master processor uses the tag to locate a corresponding entry in the object metadata DB, and updates the entry to include the received object metadata, shown as operation 628, in response to receiving the metadata update.

Returning to operation 624, the process continues to operation 630, where the adjacent ICP determines whether the object being tracked is moving toward another adjacent ICP. Operation 630 may occur each time metadata is generated. The adjacent ICP analyzes the metadata to determine whether the object is moving toward a boundary associated with an adjacent ICP. If the object is not moving toward another adjacent ICP, the (present) adjacent ICP returns to operation 624 and continues tracking the object. If the object is moving toward the other adjacent ICP, the process continues to operation 632, where the present adjacent ICP sends an object metadata message to the other adjacent ICP, which includes the most-recently updated or generated object metadata and the associated tag. The other adjacent ICP may then begin a separate instance or execution of the process shown in FIG. 6B for each received object metadata message.

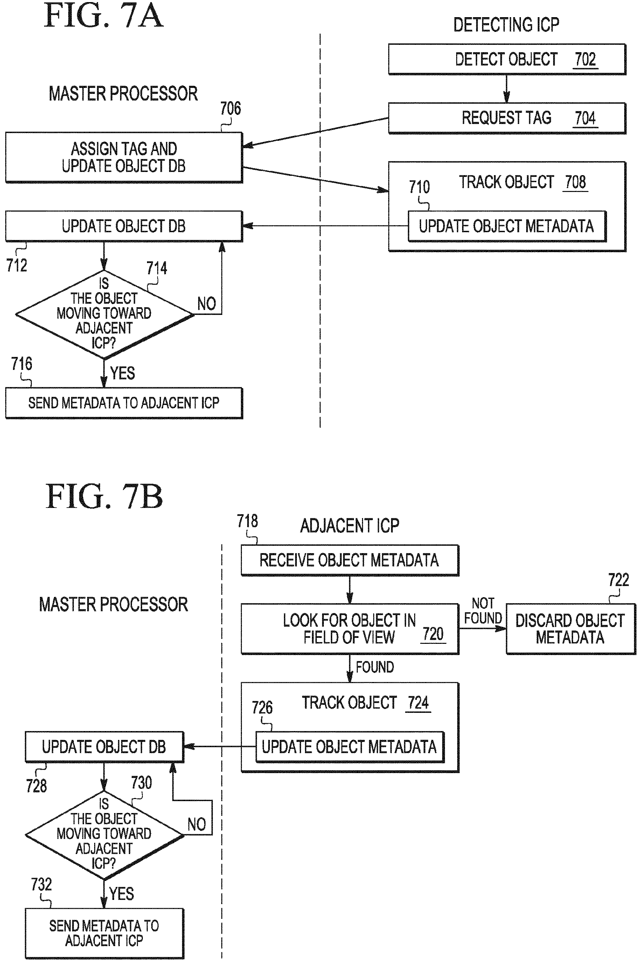

FIG. 7A illustrates a flowchart depicting an alternative example of object processing operations implemented by ICPs, which is referred to as a process. The operations implemented by the master ICP (also referred to as the master processor) are shown on the left side of the flowchart, and the process operations implemented by a detecting ICP are shown on the right side of the flowchart. The process illustrated in FIG. 7A includes operations 702, 704, 706, 708, 710, and 712 that are analogous to operations 602, 604, 606, 608, 610, and 612 described above.

The process illustrated in FIG. 7A then continues from operation 712 to operation 714, where the master processor determines whether the object being tracked is moving toward an ICP that is adjacent to the detecting ICP (also referred to as an adjacent ICP). Operation 714 may be triggered each time metadata for the object is received and updated in the object metadata DB. The master processor analyzes the metadata generated for the object to determine whether the object is moving toward a boundary associated with an adjacent ICP. If the object is not moving toward an adjacent ICP, the process returns to operation 712 and the master processor waits for any additional metadata updates for the object that are received from the detecting ICP. If the object is moving toward an adjacent ICP, the process continues to operation 716, where the master processor sends an object metadata message to the adjacent ICP, which includes the most-recently updated or generated object metadata and the associated tag.

FIG. 7B illustrates a flowchart depicting additional example object processing implemented by ICPs, which is referred to as a process. Operations implemented by the master processor are shown on the left side of the flowchart and operations implemented by an adjacent ICP are shown on the right side of the flowchart. The process illustrated in FIG. 7B includes operations 718, 720, 722, 724, 726, and 728 that are analogous to operations 618, 620, 622, 624, 626, and 628 described above.

The process illustrated in FIG. 7B then continues from operation 728 to operation 730, where the master processor determines whether the object being tracked is moving toward another ICP that is adjacent to the present adjacent ICP (also referred to as another adjacent ICP). Operation 730 may be triggered each time metadata for the object is received and updated in the object metadata DB. The master processor analyzes the metadata generated for the object to determine whether the object is moving toward a boundary associated with another adjacent ICP. If the object is not moving toward another adjacent ICP, the process returns to operation 728 and the master processor waits for any additional metadata updates for the object that are received from the present adjacent ICP. If the object is moving toward the other adjacent ICP, the process continues to operation 732, where the master processor sends an object metadata message to the other adjacent ICP, which includes the most-recently updated or generated object metadata and the associated tag. The other adjacent ICP may then begin a separate instance or execution of the process shown in FIG. 7B for each received object metadata message.

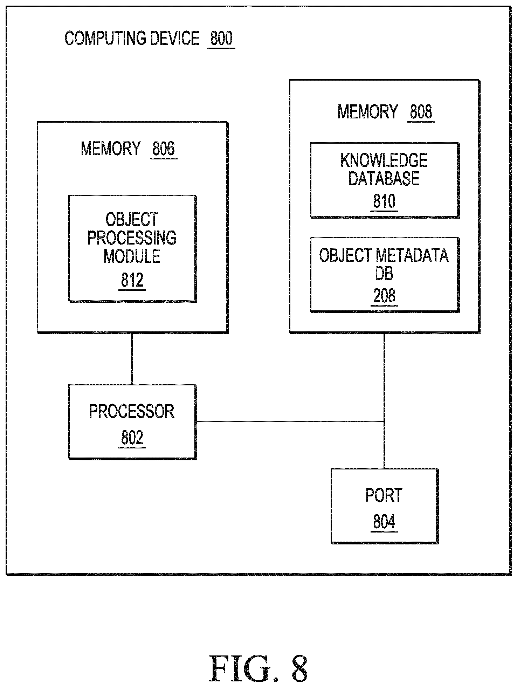

Each ICP includes at least one processing unit, a local memory, and at least one input/output (I/O) port. Each ICP may be implemented by a computing device 800 like that shown in FIG. 8. Computing device 800 includes a processor 802, memory 806 and 808, and at least one input/output (I/O) port 804. The processor 802 is configured to process information (such as optical data received from an image sensor that is coupled to a dedicated port by a communication bus or peripheral bus or the like) according to a program (such as an object processing module 812 stored in memory 806, which includes object detection, object classification, and object tracking) and produces resultant output information (such as metadata) that may be stored in memory 808, like in object metadata DB 208. The output information may also be output via I/O port 804 (such as to an adjacent ICP or a master ICP). Other information may also be received via I/O port 804 (such as metadata or GPS information or LIDAR/RADAR information) and stored in memory 808 (such as in knowledge database 810). A program is a list of instructions such as a particular application program and/or an operating system, which is typically stored internally on computer readable storage medium of the computing device. The at least one I/O port 804 may include one or more hardware ports or other network interfaces that can be linked to image sensors, other computing devices like an ICP or a master ICP or infrastructure device that may also be implemented using a computing device 800, hosts, servers, storage devices, or the like. The processor 812, memory 806 and 808, and I/O port are coupled to send and receive data and control signals by one or more buses or other interconnects, such as by a wired or wireless connection via the I/O port.

Examples of a computing device 800 include but are not limited to a mainframe, a server, a workstation, a personal computer, a minicomputer, and the like. Examples of a processor 802 include but are not limited to microprocessors, PLDs (Programmable Logic Devices), or ASICs (Application Specific Integrated Circuits)) configured to execute program instructions stored in the local memory. Examples of memory 806 or memory 808 include but are not limited to various types of RAM (Random Access Memory), ROM (Read Only Memory), non-volatile memory like FLASH memory, volatile memory, and other computer readable media.

Examples of computer readable media may include but are not limited to: magnetic storage media including disk and tape storage media; optical storage media such as compact disk media (e.g., CD ROM, CD R, etc.) and digital versatile disk (DVD) storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.; and data transmission media including computer networks, point-to-point telecommunication equipment, and carrier wave transmission media, just to name a few. Computer readable storage media may be permanently, removably or remotely coupled to the computing device.

By now it should be appreciated that there has been provided a distributed image cognition processing system that shares object metadata between image cognition processors, which reduces duplicative processing, as well as decreases the processing overhead of the image processors. When a given ICP determines that a tracked object is about to move into an adjacent field of view, the metadata for that tracked object is sent to the neighboring ICP. The neighboring ICP searches for the object in a localized region, and begins tracking the object, which eliminates the need for repeated object detection and object classification for the object by the neighboring ICP.

In one embodiment of the present disclosure, a method for operating an image cognition processing system is provided, the method including: detecting an object in a first field of view of a first image sensor, wherein the first image sensor is coupled to a first image cognition processor; generating tracking metadata for the object, wherein the generating is performed by the first image cognition processor, and the tracking metadata describes movement of the object; determining that the object is moving toward a second field of view of a second image sensor, wherein the second image sensor is located adjacent to the first image sensor; and providing the tracking metadata for the object to a second image cognition processor coupled to the second image sensor.

One aspect of the above embodiment provides that the detecting the object includes: analyzing image data provided from the first image sensor using an object recognition algorithm, and determining a classification type of the object, wherein the classification type is one of a group including: a vehicle, a person, a sign, and a road marking.

Another aspect of the above embodiment provides that the method further includes: receiving the tracking metadata for the object at the second image cognition processor; utilizing the tracking metadata to locate the object in an area of interest in the second field of view of the second image sensor; and generating additional tracking metadata for the object to continue tracking movement of the object.

Another aspect of the above embodiment provides that the method further includes: obtaining an object tag for the object, in response to the detecting the object, wherein the first image cognition processor is communicatively coupled to a master image cognition processor, and the object tag includes a unique identifier associated with the object.

A further aspect of the above embodiment provides that the method further includes: updating an object metadata database with the tracking metadata, wherein the tracking metadata is provided with the object tag to the master image cognition processor by the first image cognition processor, and the master image cognition processor stores the tracking metadata in the object metadata database, utilizing the object tag as an index into the object metadata database.

Another aspect of the above embodiment provides that the providing the tracking metadata is performed by the first image cognition processor.

Another aspect of the above embodiment provides that the providing the tracking metadata is performed by a master image cognition processor communicatively coupled to the first and second image cognition processors.

Another aspect of the above embodiment provides that the tracking metadata for the object includes at least one of a group including: relative distance from the first image sensor, relative speed of the object with reference to the first image sensor, a motion vector of the object, an object size, and classification data.

Another aspect of the above embodiment provides that the method further includes: receiving sensor data associated with the object from a RADAR/LIDAR processing system; and generating additional tracking metadata for the object based on the sensor data.

Another aspect of the above embodiment provides that the method further includes: receiving GPS (global positioning system) data from a GPS processing system that indicates a present position; locating the present position in map data retrieved from a local knowledge database; and identifying one or more features in a path from the present position, wherein the first image cognition processor is configured to search for the one or more features in the first field of view.

Another aspect of the above embodiment provides that the method further includes: analyzing the tracking metadata for the object for collision avoidance, wherein the analyzing the tracking metadata is performed by a master image cognition processor, and providing an alert to an automotive central processing unit (CPU), wherein the alert provides avoidance information associated with the object to the automotive CPU.

In another embodiment of the present disclosure, an image cognition processing system is provided, which includes: a plurality of image sensors, each image sensor captures a respective field of view; and a plurality of image cognition processors (ICP), each ICP coupled to receive image data from a respective image sensor of the plurality of image sensors, wherein each ICP is configured to: detect an object in the image data of the respective field of view, generate tracking metadata for the object, wherein the tracking metadata describes movement of the object; determine that the object is moving toward a neighboring field of view, wherein the neighboring field of view is captured by an adjacent image sensor; and provide the tracking metadata for the object to an adjacent ICP coupled to the adjacent image sensor.

One aspect of the above embodiment provides that the image cognition processing system further includes: a master image cognition process (ICP) configured to maintain an object metadata database, wherein the object metadata database is updated with tracking metadata generated by the plurality of ICPs.

A further aspect of the above embodiment provides that the image cognition processing system is implemented on a vehicle, and the master ICP is further configured to: analyze the tracking metadata of the object, and provide collision avoidance alerts to a central processing unit (CPU) of the vehicle.

Another further aspect of the above embodiment provides that one of the plurality of ICPs serves as the master image cognition processor.

Another further aspect of the above embodiment provides that the master image cognition processor is further configured to provide the tracking metadata of the object to the adjacent ICP.

Another aspect of the above embodiment provides that each ICP is further configured to provide the tracking metadata of the object to the adjacent ICP.

Another aspect of the above embodiment provides that the plurality of ICPs are communicatively coupled to one another in a bi-directional ring network arrangement.

Another further aspect of the above embodiment provides that the master ICP is further configured to: receive data from at least one of a group including: a RADAR/LIDAR processing system, a global positioning system (GPS), and an infrastructure device implemented in a stop light or a road camera; generate one or more indications based on the data; and provide the one or more indications to a central processing unit (CPU) of the vehicle for driver assistance.

Another aspect of the above embodiment provides that the adjacent ICP is configured to utilize the tracking metadata of the object to locate and track the object without performance of an initial analysis and classification type determination of the image data of the neighboring field of view.

Embodiments of an image cognition processing system are provided, including a method that includes detecting an object in a first field of view of a first image sensor, wherein the first image sensor is coupled to a first image cognition processor; generating tracking metadata for the object, wherein the generating is performed by the first image cognition processor, and the tracking metadata describes movement of the object; determining that the object is moving toward a second field of view of a second image sensor, wherein the second image sensor is located adjacent to the first image sensor; and providing the tracking metadata for the object to a second image cognition processor coupled to the second image sensor.

The circuitry described herein may be implemented on a semiconductor substrate, which can be any semiconductor material or combinations of materials, such as gallium arsenide, silicon germanium, silicon-on-insulator (SOI), silicon, monocrystalline silicon, the like, and combinations of the above.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common mode).

The following description refers to nodes or features being "connected" or "coupled" together. As used herein, unless expressly stated otherwise, "coupled" means that one node or feature is directly or indirectly joined to (or is in direct or indirect communication with) another node or feature, and not necessarily physically. As used herein, unless expressly stated otherwise, "connected" means that one node or feature is directly joined to (or is in direct communication with) another node of feature. For example, a switch may be "coupled to a plurality of nodes, but all of those nodes need not always be "connected" to each other; the switch may connect different nodes to each other depending upon the state of the switch. Furthermore, although the various schematics shown herein depict certain example arrangements of elements, additional intervening elements, devices, features, or components may be present in an actual embodiment (assuming that the functionality of the given circuit is not adversely affected).

As used herein, the term "bus" is used to refer to a plurality of signals or conductors which may be used to transfer one or more various types of information, such as data, addresses, control, or status. The conductors as discussed herein may be illustrated or described in reference to being a single conductor, a plurality of conductors, unidirectional conductors, or bidirectional conductors. However, different embodiments may vary the implementation of the conductors. For example, separate unidirectional conductors may be used rather than bidirectional conductors and vice versa. Also, plurality of conductors may be replaced with a single conductor that transfers multiple signals serially or in a time multiplexed manner. Likewise, single conductors carrying multiple signals may be separated out into various different conductors carrying subsets of these signals. Therefore, many options exist for transferring signals.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Although the invention is described herein with reference to specific embodiments, various modifications and changes can be made without departing from the scope of the present invention as set forth in the claims below. For example, additional or fewer ICPs may be implemented in FIG. 2. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A method for operating an image cognition processing system (300) in a vehicle (302) to assist in vehicle control, the method comprising:
receiving global positioning system, GPS, data from a GPS processing system (218) on the vehicle (302) that indicates a present position of the vehicle (302);
locating the present position in map data retrieved from a local knowledge database (810);
identifying an object from the map data in a path from the present position;
searching for and detecting (602, 702) the object (402, 502) in a first field of view (V310) of a first image sensor (310) on the vehicle (302), wherein the first image sensor is coupled to a first image cognition processor (410/510) on the vehicle (302);
generating (610, 710) tracking metadata (T402:M, T502:M) for the object, wherein the generating is performed by the first image cognition processor, and the tracking metadata describes movement of the object;
determining (614, 714) that the object is moving toward a second field of view (V308) of a second image sensor (308) on the vehicle (302), wherein the second image sensor is located adjacent to the first image sensor;
providing (632, 732) the tracking metadata for the object to a second image cognition processor (408, 508) on the vehicle (302) coupled to the second image sensor.

2. The method of claim 1, wherein the detecting the object comprises:
analyzing image data provided from the first image sensor using an object recognition algorithm, and
determining a classification type of the object, wherein the classification type is one of a group including: a vehicle, a person, a sign, and a road marking.

3. The method of claim 1 or 2, further comprising:
receiving (618, 718) the tracking metadata for the object at the second image cognition processor;
utilizing (620, 720) the tracking metadata to locate the object in an area of interest in the second field of view of the second image sensor; and
generating (626, 726) additional tracking metadata for the object to continue tracking movement of the object.

4. The method of any preceding claim, further comprising:
obtaining (604, 704) an object tag for the object, in response to the detecting the object, wherein
the first image cognition processor is communicatively coupled to a master image cognition processor (206, 406, 514), and
the object tag comprises a unique identifier associated with the object.

5. The method of claim 4, further comprising:
updating (612, 712) an object metadata database (208) with the tracking metadata,
wherein
the tracking metadata is provided with the object tag to the master image cognition processor by the first image cognition processor, and
the master image cognition processor stores the tracking metadata in the object metadata database, utilizing the object tag as an index into the object metadata database.

6. The method of any preceding claim, wherein the providing (632) the tracking metadata is performed by the first image cognition processor.

7. The method of any one of claims 1 to 5, wherein the providing (732) the tracking metadata is performed by a master image cognition processor (514) communicatively coupled to the first and second image cognition processors.

8. The method of any preceding claim, wherein the tracking metadata for the object comprises at least one of a group including: relative distance from the first image sensor, relative speed of the object with reference to the first image sensor, a motion vector of the object, an object size, and classification data.

9. The method of any preceding claim, further comprising:
analyzing the tracking metadata for the object for collision avoidance, wherein the analyzing the tracking metadata is performed by a master image cognition processor, and
providing an alert to an automotive central processing unit, CPU, wherein the alert provides avoidance information associated with the object to the automotive CPU.

10. An image cognition processing system (300) implemented on a vehicle (302) to assist in vehicle control, the system (300) comprising:
a master image cognition processor (514, 406) configured to:
receive global positioning system, GPS, data from a GPS processing system (218) on the vehicle (302) that indicates a present position of the vehicle (302);
locate the present position in map data retrieved from a local knowledge database (810); and
identify an object from the map data in a path from the present position;
a plurality of image sensors (304-312) on the vehicle (302), each image sensor captures a respective field of view; and
a plurality of image cognition processors, ICP (404-412, 504-512) on the vehicle (302), each ICP coupled to receive image data from a respective image sensor of the plurality of image sensors, wherein each ICP is configured to:
search for and detect the object in the image data of the respective field of view (V310),
generate (610/710) tracking metadata (T402:M, T502:M) for the object, wherein the tracking metadata describes movement of the object;
determine (614, 714) that the object is moving toward a neighboring field of view (V308), wherein the neighboring field of view is captured by an adjacent image sensor (308); and
provide (632, 732) the tracking metadata for the object to an adjacent ICP (408, 508) coupled to the adjacent image sensor.

11. The image cognition processing system of claim 10, wherein the master image cognition processor is further configured to maintain an object metadata database (208), wherein the object metadata database is updated with tracking metadata generated by the plurality of ICPs.

12. The image cognition processing system of claim 11, wherein
the master ICP is further configured to:
analyze the tracking metadata of the object, and
provide collision avoidance alerts to a central processing unit, CPU (106), of the vehicle.

13. The image cognition processing system of claim 11 or 12, wherein one of the plurality of ICPs serves as the master image cognition processor.

14. The image cognition processing system of any of claims 11 to 13, wherein the master image cognition processor is further configured to provide the tracking metadata of the object to the adjacent ICP.

15. The image cognition processing system of any of claims 10 to 14, wherein the adjacent ICP is configured to utilize the tracking metadata of the object to locate and track the object without performance of an initial analysis and classification type determination of the image data of the neighboring field of view.

## Patentansprüche

1. Verfahren zum Betreiben eines Bildkognition-Verarbeitungssystems (300) in einem Fahrzeug (302) zum Unterstützen bei der Fahrzeugsteuerung, das Verfahren umfassend:
Empfangen von Daten eines globalen Positionierungssystems, GPS, von einem GPS-Verarbeitungssystem (218) an dem Fahrzeug (302), die eine gegenwärtige Position des Fahrzeugs (302) angeben;
Lokalisieren der gegenwärtigen Position in Kartendaten, abgerufen aus einer lokalen Wissensdatenbank (810);
Identifizieren eines Objekts aus den Kartendaten in einem Weg von der gegenwärtigen Position;
Suchen nach dem und Detektieren (602, 702) des Objekts (402, 502) in einem ersten Sichtfeld (V310) eines ersten Bildsensors (310) an dem Fahrzeug (302), wobei der erste Bildsensor an einen ersten Bildkognitionsprozessor (410/510) an dem Fahrzeug (302) gekoppelt ist;
Erzeugen (610, 710) von Verfolgungsmetadaten (T402:M, T502:M) für das Objekt, wobei das Erzeugen durch den ersten Bildkognitionsprozessor durchgeführt wird und die Verfolgungsmetadaten eine Bewegung des Objekts beschreiben;
Bestimmen (614, 714), dass sich das Objekt hin zu einem zweiten Sichtfeld (V308) eines zweiten Bildsensors (308) an dem Fahrzeug (302) bewegt, wobei der zweite Bildsensor angrenzend an dem ersten Bildsensor angeordnet ist;
Bereitstellen (632, 732) der Verfolgungsmetadaten für das Objekt einem zweiten Bildkognitionsprozessor (408, 508) an dem Fahrzeug (302), der an den zweiten Bildsensor gekoppelt ist.

2. Verfahren nach Anspruch 1, wobei das Detektieren des Objekts umfasst:
Analysieren von durch den ersten Bildsensor bereitgestellten Bilddaten unter Verwendung eines Objekterkennungsalgorithmus und
Bestimmen eines Klassifizierungstyps des Objekts, wobei der Klassifizierungstyp einer einer Gruppe ist, enthaltend: ein Fahrzeug, eine Person, ein Zeichen und eine Straßenmarkierung.

3. Verfahren nach Anspruch 1 oder 2, ferner umfassend:
Empfangen (618, 718) der Verfolgungsmetadaten für das Objekt an dem zweiten Bildkognitionsprozessor;
Nutzen (620, 720) der Verfolgungsmetadaten zum Lokalisieren des Objekts in einem interessierenden Bereich in dem zweiten Sichtfeld des zweiten Bildsensors; und
Erzeugen (626, 726) von zusätzlichen Verfolgungsmetadaten für das Objekt, um Verfolgen einer Bewegung des Objekts fortzusetzen.

4. Verfahren nach einem der vorhergehenden Ansprüche, ferner umfassend:
Erlangen (604, 704) einer Objektkennzeichnung für das Objekt als Reaktion auf Detektieren des Objekts, wobei
der erste Bildkognitionsprozessor an einen Haupt-Bildkognitionsprozessor (206, 406, 514) kommunikativ gekoppelt ist und
die Objektkennzeichnung eine mit dem Objekt assoziierte eindeutige Kennung umfasst.

5. Verfahren nach Anspruch 4, ferner umfassend:
Aktualisieren (612, 712) einer Objektmetadaten-Datenbank (208) mit den Verfolgungsmetadaten, wobei
die Verfolgungsmetadaten mit der Objektkennzeichnung dem Haupt-Bildkognitionsprozessor durch den ersten Bildkognitionsprozessor bereitgestellt werden und
der Haupt-Bildkognitionsprozessor die Verfolgungsmetadaten in der Objektmetadaten-Datenbank unter Nutzung der Objektkennzeichnung als einen Index in die Objektmetadaten-Datenbank speichert.

6. Verfahren nach einem der vorhergehenden Ansprüche, wobei das Bereitstellen (632) der Verfolgungsmetadaten durch den ersten Bildkognitionsprozessor durchgeführt wird.

7. Verfahren nach einem der Ansprüche 1 bis 5, wobei das Bereitstellen (732) der Verfolgungsmetadaten durch einen Haupt-Bildkognitionsprozessor (514), der an den ersten und den zweiten Bildkognitionsprozessor kommunikativ gekoppelt ist, durchgeführt wird.

8. Verfahren nach einem der vorhergehenden Ansprüche, wobei die Verfolgungsmetadaten für das Objekt mindestens eines einer Gruppe umfasst, enthaltend: relative Distanz von dem ersten Bildsensor, relative Geschwindigkeit des Objekts in Bezug auf den ersten Bildsensor, einen Bewegungsvektor des Objekts, eine Objektgröße und Klassifizierungsdaten.

9. Verfahren nach einem der vorhergehenden Ansprüche, ferner umfassend:
Analysieren der Verfolgungsmetadaten für das Objekt für Kollisionsvermeidung, wobei das Analysieren der Verfolgungsmetadaten durch einen Haupt-Bildkognitionsprozessor durchgeführt wird, und
Bereitstellen einer Warnung einer Kraftfahrzeug-Zentralverarbeitungseinheit, CPU, wobei die Warnung der Kraftfahrzeug-CPU mit dem Objekt assoziierte Vermeidungsinformationen bereitstellt.

10. Bildkognition-Verarbeitungssystem (300), implementiert in einem Fahrzeug (302), zum Unterstützen bei der Fahrzeugsteuerung, das System (300) umfassend:
einen Haupt-Bildkognitionsprozessor (514, 406), konfiguriert zum:
Empfangen von Daten eines globalen Positionierungssystems, GPS, von einem GPS-Verarbeitungssystem (218) an dem Fahrzeug (302), die eine gegenwärtige Position des Fahrzeugs (302) angeben;
Lokalisieren der gegenwärtigen Position in Kartendaten, abgerufen aus einer lokalen Wissensdatenbank (810); und
Identifizieren eines Objekts aus den Kartendaten in einem Weg von der gegenwärtigen Position;
eine Vielzahl von Bildsensoren (304-312) an dem Fahrzeug (302), wobei jeder Bildsensor ein jeweiliges Sichtfeld erfasst; und
eine Vielzahl von Bildkognitionsprozessoren, ICP (404-412, 504-512), an dem Fahrzeug (302), jeder ICP gekoppelt zum Empfangen von Bilddaten von einem jeweiligen Bildsensor der Vielzahl von Bildsensoren, wobei jeder ICP konfiguriert ist zum:
Suchen nach dem und Detektieren des Objekts in den Bilddaten des jeweiligen Sichtfelds (V310),
Erzeugen (610, 710) von Verfolgungsmetadaten (T402:M, T502:M) für das Objekt, wobei die Verfolgungsmetadaten eine Bewegung des Objekts beschreiben;
Bestimmen (614, 714), dass sich das Objekt hin zu einem benachbarten Sichtfeld (V308) bewegt, wobei das benachbarte Sichtfeld durch einen angrenzenden Bildsensor (308) erfasst wird; und
Bereitstellen (632, 732) der Verfolgungsmetadaten für das Objekt einem angrenzenden ICP (408, 508), der an den angrenzenden Bildsensor gekoppelt ist.

11. Bildkognition-Verarbeitungssystem nach Anspruch 10, wobei der Haupt-Bildkognitionsprozessor ferner konfiguriert ist zum Führen einer Objektmetadaten-Datenbank (208), wobei die Objektmetadaten-Datenbank mit durch die Vielzahl von ICPs erzeugten Verfolgungsmetadaten aktualisiert wird.

12. Bildkognition-Verarbeitungssystem nach Anspruch 11, wobei
der Haupt-ICP ferner konfiguriert ist zum:
Analysieren der Verfolgungsmetadaten des Objekts und
Bereitstellen von Kollisionsvermeidungswarnungen einer Zentralverarbeitungseinheit, CPU (106), des Fahrzeugs.

13. Bildkognition-Verarbeitungssystem nach Anspruch 11 oder 12, wobei einer der Vielzahl von ICPs als der Haupt-Bildkognitionsprozessor dient.

14. Bildkognition-Verarbeitungssystem nach einem der Ansprüche 11 bis 13, wobei der Haupt-Bildkognitionsprozessor ferner konfiguriert ist, die Verfolgungsmetadaten des Objekts dem angrenzenden ICP bereitzustellen.

15. Bildkognition-Verarbeitungssystem nach einem der Ansprüche 10 bis 14, wobei der angrenzende ICP konfiguriert ist zum Nutzen der Verfolgungsmetadaten des Objekts zum Lokalisieren und Verfolgen des Objekts ohne Ausführung einer anfänglichen Analyse und Klassifizierungstypbestimmung der Bilddaten des benachbarten Sichtfelds.

## Revendications

1. Procédé d'exploitation d'un système de traitement de cognition d'images (300) dans un véhicule (302) pour aider à la commande du véhicule, le procédé comprenant :
la réception de données de système de localisation mondial, GPS, à partir d'un système de traitement GPS (218) sur le véhicule (302) qui indiquent une position actuelle du véhicule (302) ;
la localisation de la position actuelle dans des données de carte recouvrées à partir d'une base de données de connaissance locale (810) ;
l'identification d'un objet à partir des données de carte dans un chemin à partir de la position actuelle ;
la recherche et la détection (602, 702) de l'objet (402, 502) dans un premier champ de vision (V310) d'un premier capteur d'image (310) sur le véhicule (302), le premier capteur d'image étant couplé à un premier processeur de cognition d'images (410/510) sur le véhicule (302) ;
la génération (610, 710) de métadonnées de suivi (T402:M, T502:M) pour l'objet, la génération étant réalisée par le premier processeur de cognition d'images, et les métadonnées de suivi décrivant un mouvement de l'objet ;
la détermination (614, 714) que l'objet se déplace vers un second champ de vision (V308) d'un second capteur d'image (308) sur le véhicule (302), le second capteur d'image étant situé adjacent au premier capteur d'image ;
la fourniture (632, 732) des métadonnées de suivi pour l'objet à un second processeur de cognition d'images (408, 508) sur le véhicule (302) couplé au second capteur d'image.

2. Procédé selon la revendication 1, dans lequel la détection de l'objet comprend :
l'analyse de données d'images fournies à partir du premier capteur d'image au moyen d'un algorithme de reconnaissance d'objet, et
la détermination d'un type de classification de l'objet, le type de classification appartenant à un groupe comportant : un véhicule, une personne, un panneau, et un marque routière.

3. Procédé selon la revendication 1 ou 2, comprenant en outre :
la réception (618, 718) des métadonnées de suivi pour l'objet au niveau du second processeur de cognition d'images ;
l'utilisation (620, 720) des métadonnées de suivi pour localiser l'objet dans une zone d'intérêt dans le second champ de vision du second capteur d'image ; et
la génération (626, 726) de métadonnées de suivi supplémentaires pour l'objet afin de continuer de suivre le mouvement de l'objet.

4. Procédé selon n'importe quelle revendication précédente, comprenant en outre :
l'obtention (604, 704) d'une étiquette d'objet pour l'objet, en réponse à la détection de l'objet, dans lequel
le premier processeur de cognition d'images est couplé en communication à un processeur de cognition d'images maître (206, 406, 514), et
l'étiquette d'objet comprend un identifiant unique associé à l'objet.

5. Procédé selon la revendication 4, comprenant en outre :
la mise à jour (612, 712) d'une base de données de métadonnées d'objet (208) avec les métadonnées de suivi, dans lequel
les métadonnées de suivi sont fournies avec l'étiquette objet au processeur de cognition d'images maître par le premier processeur de cognition d'images, et
le processeur de cognition d'images maître mémorise les métadonnées de suivi dans la base de données de métadonnées d'objets, utilisant l'étiquette d'objet comme indice dans la base de données de métadonnées d'objets.

6. Procédé selon n'importe quelle revendication précédente, dans lequel la fourniture (632) des métadonnées de suivi est réalisée par le premier processeur de cognition d'images.

7. Procéder selon l'une quelconque des revendications 1 à 5, dans lequel la fourniture (732) des métadonnées de suivi est réalisée par un processeur de cognition d'images maître (514) couplé en communication aux premier et second processeurs de cognition d'images.

8. Procédé selon n'importe quelle revendication précédente, dans lequel les métadonnées de suivi pour l'objet comprennent au moins parmi le groupe suivant :
une distance relative à partir du premier capteur d'objet, une vitesse relative de l'objet en référence au premier capteur d'image, un vecteur de mouvement de l'objet, une taille d'objet, et des données de classification.

9. Procédé selon n'importe quelle revendication précédente, comprenant en outre :
l'analyse des métadonnées de suivi pour l'objet à des fins d'évitement de collision, l'analyse des métadonnées de suivi étant réalisée par un processeur de cognition d'images maître, et
la fourniture d'une alerte à une unité centrale de traitement, CPU, automobile, l'alerte fournissant à la CPU automobile des informations d'évitement associées à l'objet.

10. Système de traitement de cognition d'images (300) mis en œuvre sur un véhicule (302) pour aider à la commande du véhicule, le système (300) comprenant :
un processeur de cognition d'images maître (514, 406) configuré pour :
recevoir des données de système de localisation mondial, GPS, à partir d'un système de traitement GPS (218) sur le véhicule (302) qui indiquent une position actuelle du véhicule (302) ;
localiser la position actuelle dans des données de carte recouvrées à partir d'une base de données de connaissance locale (810) ; et
identifier un objet à partir des données de carte dans un chemin à partir de la position actuelle ;
une pluralité de capteurs d'images (304,312) sur le véhicule (302), chaque capteur d'image capturant un champ de vision respectif ; et
une pluralité de processeurs de cognition d'images, (404-412, 504-512) sur le véhicule (302), chaque ICP étant couplé pour recevoir des données d'images à partir d'un capteur d'image respectif de la pluralité de capteurs d'images, chaque ICP étant configuré pour :
rechercher et détecter l'objet dans les données d'images du champ de vision respectif (V310) ;
générer (610, 710) des métadonnées de suivi (T402:M, T502:M) pour l'objet, les métadonnées de suivi décrivant un mouvement de l'objet ;
déterminer (614, 714) que l'objet se déplace vers un second champ de vision (V308) le second champ de vision voisin étant capturé par un capteur d'images adjacent (308) ; et
fournir (632, 732) les métadonnées de suivi pour l'objet à un ICP adjacent (408, 508) couplé au capteur d'images adjacent.

11. Système de traitement de cognition d'images selon la revendication 10, dans lequel le processeur de cognition d'images maître est configuré en outre pour tenir à jour une base de données de métadonnées d'objets (208), la base de données de métadonnées d'objets étant mise à jour avec des métadonnées de suivi générées par la pluralité d'ICP.

12. Système de traitement de cognition d'images selon la revendication 11, dans lequel
l'ICP maître est configuré en outre pour :
analyser les métadonnées de suivi de l'objet,
et
fournir des alertes d'évitement de collision à une unité centrale de traitement, CPU (106), du véhicule.

13. Système de traitement de cognition d'images selon la revendication 11 ou 12, dans lequel un de la pluralité d'ICP fait office de processeur de cognition d'images maître.

14. Système de traitement de cognition d'images selon l'une quelconque des revendications 11 à 13, dans lequel le processeur de cognition d'images maître est configuré en outre pour fournir les métadonnées de suivi de l'objet à l'ICP adjacent.

15. Système de traitement de cognition d'images selon l'une quelconque des revendications 10 à 14, dans lequel l'ICP adjacent est configuré pour utiliser les métadonnées de suivi de l'objet afin de localiser et suivre l'objet sans réalisation d'une analyse initiale et d'une détermination de type de classification des données d'objet du champ de vision voisin.
